Europäisches Patentamt

European Patent Office

Office européen des brevets

(19)

(11) Numéro de publication : **0 388 315 B1**

(12) **FASCICULE DE BREVET EUROPEEN**

(45) Date de publication du fascicule du brevet :
**16.09.92 Bulletin 92/38**

(51) Int. Cl.⁵ : **G01V 1/40,** G01V 13/00,
G01N 29/04, E21B 47/00

(21) Numéro de dépôt : **90400725.9**

(22) Date de dépôt : **16.03.90**

(54) **Procédé et dispositif de diagraphie utilisant un capteur effectuant un balayage circonférentiel de la paroi d'un puits de forage, notamment afin d'étalonner ce capteur.**

(30) Priorité : **17.03.89 FR 8903535**

(43) Date de publication de la demande :
**19.09.90 Bulletin 90/38**

(45) Mention de la délivrance du brevet :
**16.09.92 Bulletin 92/38**

(84) Etats contractants désignés :
**DE DK FR GB IT NL**

(56) Documents cités :
**EP-A- 0 176 408**
**GB-A- 2 094 473**

(73) Titulaire : **SOCIETE DE PROSPECTION
ELECTRIQUE SCHLUMBERGER
42, rue Saint-Dominique
F-75007 Paris (FR)**
(84) **FR**

(73) Titulaire : **SCHLUMBERGER LIMITED
277 Park Avenue
New York, N.Y. 10172 (US)**
(84) **GB**
Titulaire : **SCHLUMBERGER TECHNOLOGY
B.V.
Carnegielaan 2
NL-2517 KB Den Haag (NL)**
(84) **DE DK IT**
Titulaire : **SCHLUMBERGER HOLDINGS
LIMITED
P.O. Box 71, Craigmuir Chambers
Road Town, Tortola (VG)**
(84) **NL**

(72) Inventeur : **Huau, Christian
2, allée des Peupliers
F-92260 Fontenay-aux-Roses (FR)**

(74) Mandataire : **Hagel, Francis et al
ETUDES ET PRODUCTIONS SCHLUMBERGER
Service Brevets B.P. 202
F-92142 Clamart Cédex (FR)**

## Description

L'invention concerne un procédé de diagraphie utilisant un capteur, tel qu'un capteur sonique ou ultrasonique destiné à être placé dans un puits de forage et effectuant un balayage circonférentiel de la paroi du puits, afin notamment de permettre un étalonnage in situ du capteur. L'invention concerne aussi un dispositif pour la mise en oeuvre de ce procédé.

Pour effectuer des mesures et des contrôles dans les puits de forage, par exemple afin de contrôler la qualité de la cimentation du tubage ou cuvelage placé dans ce puits, différents types d'appareils de mesure ont été mis au point.

Une première solution connue, décrite dans le document US-A-4 524 433, consiste à utiliser un appareil équipé d'au moins un capteur de mesure, orienté radialement par rapport à l'axe longitudinal de l'appareil et animé d'un mouvement de rotation autour de cet axe afin d'effectuer un balayage circonférentiel de la paroi du puits au niveau de ce capteur. En combinant ce mouvement de rotation du capteur avec un mouvement régulier de translation de l'appareil dans le puits, on réalise un balayage de la paroi du puits selon une trajectoire en hélice permettant d'assurer un contrôle complet de cette paroi.

Dans les appareils de mesure ainsi conçus, il n'existe aucun moyen pour réétalonner le capteur de mesure in situ lors de l'exploration du puits. Etant donné que les conditions de fonctionnement de l'appareil telles que la température et la pression, qui sont particulièrement sévères, changent le long du puits, il en résulte fréquemment une évolution dans les mesures effectuées, qui, en l'absence de réétalonnage, conduit à des erreurs qui peuvent parfois être importantes.

Le document US-A-4 685 092 décrit un autre appareil de mesure, de conception différente, dans lequel plusieurs capteurs de mesure fixes sont orientés radialement vers la paroi du puits. Ces capteurs de mesure sont placés sur l'appareil selon une hélice, de telle sorte qu'un déplacement de l'appareil parallèlement à son axe à l'intérieur du puits a pour effet de réaliser un balayage de la majeure partie de la paroi du puits.

Par rapport à l'appareil décrit précédemment, cet appareil a pour inconvénient de ne pas assurer une couverture azimutale complète de la paroi du puits.

En revanche, il comporte des moyens d'étalonnage comprenant un capteur d'étalonnage distinct des capteurs de mesure et orienté vers le bas, selon l'axe longitudinal de l'appareil, et une cible d'étalonnage placée en face de ce capteur.

En prévoyant entre cette cible et le capteur d'étalonnage une distance sensiblement identique à celle qui sépare les capteurs de mesure de la paroi du puits, on peut réaliser de temps à autre, lors de l'exploration du puits, un réétalonnage du capteur.

Cependant, cette dernière solution n'est qu'en partie satisfaisante, notamment par le fait que le capteur d'étalonnage est distinct des capteurs de mesure. L'étalonnage ne tient donc pas compte des phénomènes de dispersion pouvant exister entre ces derniers. De plus, l'orientation du capteur d'étalonnage est différente de celle des capteurs de mesure, de sorte que les mouvements du fluide contenu dans le puits par rapport au capteur d'étalonnage ne sont pas représentatifs des mouvements de ce même fluide par rapport aux capteurs de mesure.

La présente invention a précisément pour objet un procédé et un dispositif de diagraphie permettant d'amener une cible en face d'un capteur orienté vers la paroi du puits, afin notamment d'en réaliser l'étalonnage dans des conditions aussi proches que possible de celles qui existent lors des mesures, ce procédé et ce dispositif étant appliqués au cas d'un capteur animé d'un mouvement de rotation autour de l'axe longitudinal de l'appareil, ce qui permet d'assurer une couverture azimutale complète de la paroi du puits lors de la mesure.

Selon l'invention, ce résultat est obtenu au moyen d'un procédé de diagraphie utilisant un capteur équipant un appareil adapté à être placé dans un puits de forage, dans lequel, lors d'une phase de mesure, on anime le capteur d'un mouvement de rotation dans un premier sens de façon à effectuer un balayage circonférentiel de la paroi du puits, caractérisé par le fait que, lors d'une phase d'étalonnage, on amène en face l'un de l'autre le capteur et une cible étalon en inversant le sens de rotation du capteur afin d'obtenir une mesure de référence pour l'étalonnage du capteur.

De préférence, la distance entre le capteur et la cible lors de la phase d'étalonnage est sensiblement égale à la distance entre le capteur et la paroi du puits lors de la phase de mesure. De plus, la rotation du capteur étant effectuée autour d'un axe sensiblement parallèle à la direction longitudinale du puits lors de la phase de mesure, le capteur et la cible sont amenés en face l'un de l'autre sensiblement perpendiculairement à cette direction longitudinale lors de la phase d'étalonnage.

Avantageusement, on utilise une cible disposant d'un jeu angulaire limité par rapport au capteur, de telle sorte que, lors d'une phase de mesure, le mouvement de rotation du capteur dans le premier sens soit transmis à la cible occupant une première position angulaire décalée angulairement par rapport au capteur et que, lorsqu'on inverse le sens du mouvement de rotation du capteur, ce mouvement de rotation soit transmis à la cible occupant une deuxième position angulaire en face du capteur, après rattrapage dudit jeu angulaire.

L'invention concerne également un dispositif de diagraphie apte à être placé dans un puits de forage, comprenant une enveloppe, un capteur monté tournant autour d'un axe longitudinal de l'enveloppe et des moyens d'entraînement pour faire tourner le capteur autour de cet axe dans un premier sens de façon à balayer la paroi du puits, caractérisé en ce qu'il comprend :

– une cible étalon ; et

– des moyens de déplacement sensibles au sens de rotation du capteur pour déplacer l'un par rapport à l'autre le capteur et la cible d'une position de mesure pour laquelle le capteur est orienté vers la paroi du puits à une position d'étalonnage pour laquelle le capteur est en face de la cible lorsqu'on inverse le sens de rotation.

Avantageusement, les moyens de déplacement comprennent des moyens de transmission de mouvement entre le capteur et la cible définissant un jeu angulaire limité tel que lorsque le capteur tourne dans le premier sens, la cible occupe une position de mesure décalée angulairement par rapport au capteur et que, lorsque le capteur tourne en sens inverse, la cible occupe la position d'étalonnage.

De préférence, le dispositif comprend une tête tournante portant un support de cible et montée de façon rotative sur l'axe longitudinal de l'enveloppe, et le capteur est supporté de façon rotative par le support de cible, autour d'un premier axe parallèle et décalé par rapport à l'axe longitudinal de l'enveloppe.

Afin de permettre une adaptation des dimensions de l'appareil en fonction des dimensions du puits, le support de cible est avantageusement monté sur la tête tournante de façon interchangeable.

Par ailleurs, le capteur est fixé de préférence de façon amovible sur un support de capteur, lui-même monté de façon rotative sur le support de cible, ce qui permet notamment d'utiliser un même capteur sur des supports de cible différents.

Dans un premier mode de réalisation préféré de l'invention, adapté au cas de l'utilisation de capteurs de faible dimension, le support de cible est fixé sur la tête tournante et les moyens de transmission de mouvement définissant ledit jeu angulaire limité sont placés entre le capteur et le support de cible. Les moyens d'entraînement en rotation du capteur comprennent alors un arbre d'entraînement monté selon ledit axe longitudinal à l'intérieur de la tête tournante et un mécanisme de transmission au capteur d'un mouvement de rotation de cet arbre.

Dans un deuxième mode de réalisation préféré de l'invention, adapté au cas de capteurs de plus grande dimension, le support de cible est supporté de façon rotative par la tête tournante autour d'un deuxième axe parallèle et décalé par rapport au premier axe et à l'axe longitudinal de l'enveloppe, ce deuxième axe étant situé entre le premier axe et l'axe longitudinal lorsque le capteur tourne dans le sens de mesure, les moyens de transmission de mouvement définissant le jeu angulaire limité étant placés entre la tête tournante et le support de cible.

Dans ce dernier cas, les moyens d'entraînement en rotation du capteur comprennent la tête tournante et un mécanisme de transmission au capteur d'un mouvement de rotation de cette dernière.

Deux modes de réalisation préférés de l'invention vont à présent être décrits, à titre d'exemples non limitatifs, en se référant aux dessins annexés, dans lesquels :

– la figure 1 est une vue en coupe longitudinale représentant l'extrémité inférieure d'un appareil de mesure placé dans un puits de forage et comportant un dispositif réalisé selon un premier mode de réalisation de l'invention ;

– les figures 2A à 2D sont des vues en coupe selon la ligne II-II de la figure 1 illustrant différentes positions angulaires relatives entre le capteur et le support de cible équipant l'appareil ;

– les figures 3A et 3B sont des vues en coupe longitudinale schématiques comparables à la figure 1, illustrant l'adaptation de l'appareil à des puits de forage de différents diamètres grâce à l'interchangeabilité du support de cible ;

– les figures 4A et 4B sont des vues en coupe longitudinale d'un appareil de mesure comportant un dispositif réalisé selon un deuxième mode de réalisation de l'invention, les différentes parties de l'appareil étant représentées respectivement dans les positions qu'elles occupent lors de la mesure et lors de l'étalonnage; et

– les figures 5A à 5C sont des vues en coupe schématiques selon la ligne V-V de la figure 4A illustrant respectivement trois positions relatives du capteur, du support de cible et de la tête rotative de l'appareil.

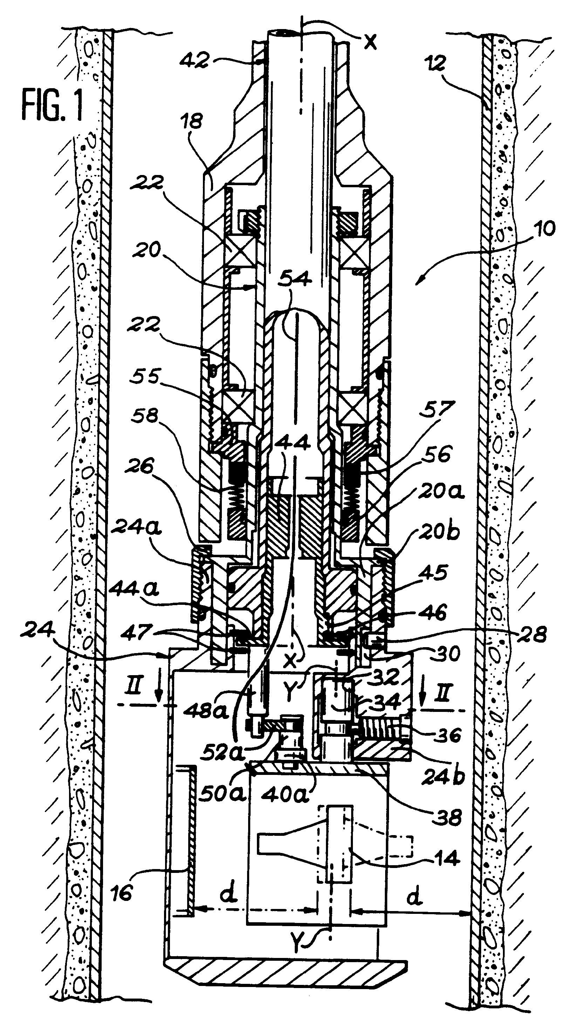

Sur la figure 1, la référence 10 désigne de façon générale l'extrémité inférieure d'un appareil de mesure destiné par exemple à effectuer le contrôle de la cimentation du tubage 12 d'un puits de forage approximativement cylindrique tel qu'un forage géophysique.

L'appareil de mesure 10 comprend un capteur 14 tel qu'un capteur ultrasonique, normalement orienté radialement vers la paroi du puits, c'est-à-dire vers le tubage 12, par rapport à l'axe longitudinal XX de l'appareil, de façon à effectuer une mesure à distance.

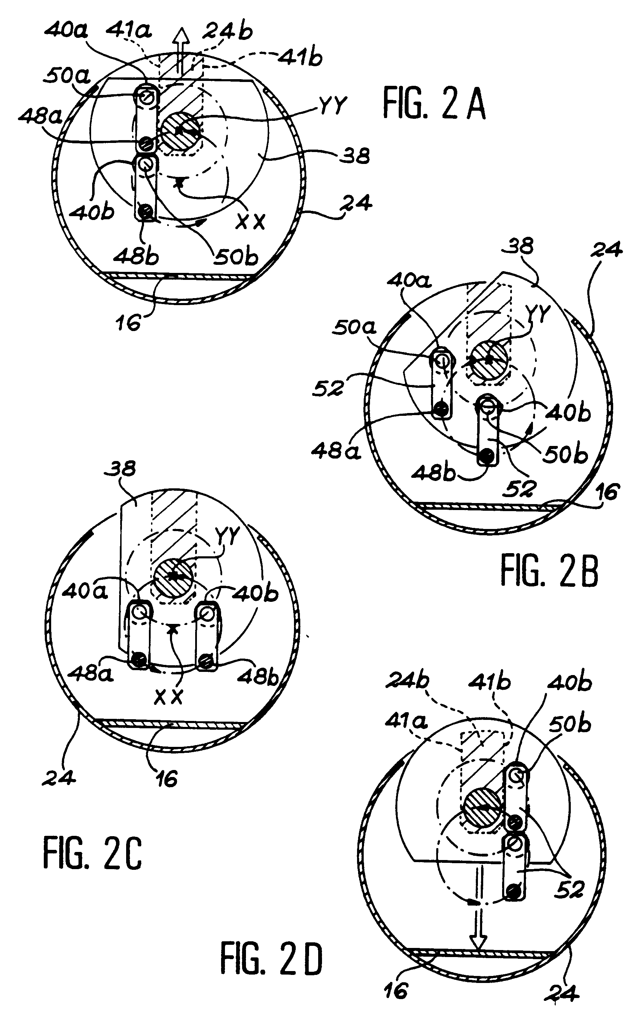

Des moyens d'entraînement en rotation du capteur 14 autour de l'axe longitudinal XX de l'appareil, qui seront décrits en détail par la suite, permettent d'effectuer un balayage azimutal complet de la paroi du puits lorsque la rotation est commandée dans le sens des aiguilles d'une montre en considérant la figure 2A. Simultanément, l'ensemble de l'appareil 10 est déplacé régulièrement en translation vers le haut selon son axe longitudinal, par des moyens classiques (non représentés) situés au-dessus du sol. On effectue ainsi un balayage en hélice de la paroi du puits de forage à l'aide du capteur.

Afin que la distance séparant le capteur 14 de la paroi reste pratiquement constante au cours de ce mouvement de balayage, l'appareil de mesure 10 est équipé de façon connue de moyens de centrage constitués par exemple par des bras extensibles (non représentés) amenés en contact avec la paroi du puits. L'axe longitudinal XX de l'appareil est alors pratiquement confondu avec l'axe du puits de forage.

Conformément à l'invention, afin de permettre d'effectuer un étalonnage du capteur 14 à l'intérieur même du puits de forage, l'appareil de mesure 10 comporte également une cible étalon 16 orientée parallèlement à l'axe longitudinal XX de l'appareil et située au même niveau que le capteur 14. Cette cible 16 ainsi que le capteur 14 sont montés sur l'appareil de telle sorte qu'une inversion du sens de rotation du capteur autour de l'axe longitudinal XX de l'appareil a pour effet d'amener automatiquement la cible 16 en face du capteur 14, dans des conditions aussi proches que possible de celles dans lesquelles une mesure réelle est effectuée par le capteur.

A cet effet, la cible 16 présente des caractéristiques aussi proches que possible de celles du tubage 12 constituant l'enveloppe intérieure du puits de forage à contrôler, la distance séparant le capteur de la cible en position d'étalonnage est aussi proche que possible de la distance séparant le capteur du tubage 12 au cours d'une phase de mesure et l'écoulement des fluides présents dans le puits s'effectue également d'une manière relativement comparable dans les deux positions.

Dans le mode de réalisation illustré sur les figures 1 à 3, les dimensions du capteur 14 sont suffisamment réduites pour que les conditions précitées puissent être obtenues par une simple rotation sur lui-même du capteur 14 autour d'un axe YY parallèle et décalé par rapport à l'axe longitudinal XX de l'appareil.

Comme l'illustre plus en détail la figure 1, ce résultat est obtenu en pratique au moyen d'un appareil de mesure 10 comportant une enveloppe extérieure tubulaire non rotative 18, dans laquelle est monté rotatif un arbre creux extérieur 20, par l'intermédiaire de deux paliers 22. Cet arbre creux extérieur 20 constitue une tête rotative qui se prolonge vers le bas au-delà de l'extrémité inférieure de l'enveloppe 18, pour supporter un support de cible 24 dans lequel est fixée la cible 16.

Plus précisément, le support de cible 24 est fixé de façon démontable sur une partie inférieure tubulaire 20a de l'arbre creux 20, par exemple au moyen d'une bague 26 vissée sur une partie supérieure tubulaire filetée 24a du support 24, de façon à plaquer une collerette 20b solidaire de l'arbre 20 contre le bord supérieur de la partie tubulaire filetée 24a. Un pion 28 monté dans l'extrémité supérieure filetée 24a du support 24 fait saillie radialement vers l'intérieur dans une rainure longitudinale 30 formée dans la partie inférieure tubulaire 20a de l'arbre 20, de façon à empêcher toute rotation relative entre ce dernier et le support 24.

Ainsi, l'ensemble formé par l'arbre creux extérieur 20 et le support de cible 24 peut tourner librement par rapport à l'enveloppe extérieure 18 de l'appareil, autour de l'axe longitudinal XX de ce dernier. Quelle que soit la position angulaire de cet ensemble, la cible 16 est fixée sur le support 24 de façon à être orientée en permanence parallèlement à l'axe longitudinal XX de l'appareil et située à une distance constante de cet axe.

En un emplacement diamétralement opposé à la cible 16 par rapport à l'axe longitudinal XX de l'appareil, le support de cible 24 comporte un bloc 24b adjacent à la partie tubulaire filetée 24a et dans lequel est formé un alésage 32 dont l'axe YY est parallèle et décalé par rapport à l'axe longitudinal XX de l'appareil. Une tige cylindrique 34 est montée de façon tournante dans cet alésage 32 et immobilisée en translation par une vis 36 vissée dans le bloc 24b et dont l'extrémité est reçue dans une gorge de la tige cylindrique 34.

La tige cylindrique 34 est solidaire à son extrémité inférieure d'une plaque support 38 orientée radialement par rapport aux axes XX et YY et constituant le support du capteur 14. Le capteur 14 est fixé de façon démontable sur cette plaque support 38 par des moyens de fixation tels que des vis (non représentées).

Il est à noter que la distance $\underline{d}$ séparant le capteur 14 de la paroi intérieure du puits de forage lorsque le capteur est orienté radialement vers cette paroi par rapport à l'axe XX, est approximativement égale à la distance séparant ce même capteur de la cible 16 lorsque le capteur a subi une rotation de 180° autour de l'axe YY, comme illustré en traits mixtes sur la figure 1.

Lorsqu'une mesure est effectuée, le capteur 14 doit être orienté en permanence vers la paroi du puits et la distance $\underline{d}$ entre ce capteur et la paroi doit rester constante. L'entraînement en rotation du capteur doit alors être transmis intégralement au support de cible 24, afin qu'aucune rotation du capteur autour de l'axe YY ne se produise et que le capteur tourne à l'unisson avec le support 24 autour de l'axe XX de l'appareil.

Par ailleurs, les moyens permettant de transmettre au support de cible 24 le mouvement de rotation du capteur 14 dans le sens de la mesure définissent un jeu angulaire tel que, lorsqu'on inverse le sens de rotation du capteur, celui-ci tourne librement autour de l'axe YY d'un angle voisin de 180°, afin de venir se placer en face de la cible 16. Lorsque cette rotation du capteur 14 en sens opposé se poursuit au-delà de 180°, elle est à nouveau transmise au support 24 portant la cible 16, de telle sorte que le capteur 14 reste en face de cette dernière. Un réétalonnage du capteur ou une opération analogue peut alors être effectué dans des conditions pratiquement identiques à celles de la mesure, aussi bien en ce qui concerne la distance capteur-cible qu'en ce qui concerne la direction et la vitesse d'écoulement entre le capteur et la cible du fluide présent dans le puits.

En pratique, dans l'exemple de réalisation représenté sur la figure 1 et sur les figures 2A à 2D, les moyens permettant de transmettre à la cible un mouvement de rotation du capteur avec un jeu angulaire limité d'environ 180° comprennent deux butées 40a et 40b qui font saillie sur la plaque support 38, du même côté que la tige cylindrique 34, de façon à pouvoir venir en appui contre les faces opposées 41a et 41b du bloc 24b. Les deux positions extrêmes correspondant respectivement à la venue en appui de la butée 40a contre la face 41a de ce bloc et à la venue en appui de la butée 40b contre la face 41b, sont illustrées respectivement sur les figures 2A et 2D. Elles sont séparées par une rotation d'environ 180° de la plaque support 38 du capteur, autour de l'axe YY, par rapport au support de cible 24 dans le sens inverse des aiguilles d'une montre.

L'appareil de mesure 10 représenté sur la figure 1 comprend de plus des moyens permettant d'entraîner en rotation le capteur 14 soit dans un premier sens pour effectuer les mesures souhaitées à l'intérieur du puits, soit en sens opposé, pour permettre le réétalonnage du capteur.

Ces moyens d'entraînement comprennent tout d'abord un arbre creux intérieur 42 qui est monté de façon rotative à l'intérieur de l'arbre creux extérieur 20. Cet arbre 42 est relié par son extrémité supérieure à un moteur d'entraînement en rotation (non représenté) associé à des moyens permettant d'inverser le sens de rotation de cet arbre. Dans l'extrémité inférieure de l'arbre creux 42 est emboîtée une pièce d'entraînement cylindrique 44. Cette pièce d'entraînement comporte sur sa surface extérieure une clavette 45 qui est reçue dans une rainure axiale 46 formée à l'intérieur de l'arbre 42. La pièce d'entraînement 44 est ainsi solidarisée en rotation de l'arbre 42, tout en pouvant être séparée de ce dernier par un déplacement vers le bas, comme on le verra ultérieurement.

A son extrémité inférieure, la pièce d'entraînement 44 comporte une collerette 44a qui est emprisonnée avec un léger jeu axial entre deux rondelles 47 montées dans deux gorges circonférentielles à l'intérieur de la partie supérieure tubulaire 24a du support de cible 24. Cette structure permet normalement d'immobiliser en translation la pièce 44 par rapport à l'arbre creux d'entraînement 42 et de démonter cette pièce 44 avec le support de cible 24 lors du dévissage de la bague 26.

Sur sa face inférieure, la collerette 44a porte deux tiges cylindriques 48a et 48b orientées parallèlement à l'axe XX de l'appareil et disposées à une même distance de cet axe. Sur sa face supérieure, la plaque support 38 porte également deux tiges cylindriques 50a et 50b orientées parallèlement à l'axe YY et situées à une même distance de cet axe. L'écartement entre les axes 48a et 48b est le même que l'écartement entre les axes 50a et 50b, comme l'illustrent les figures 2A à 2D.

Deux biellettes parallèles 52a et 52b, situées dans un plan orienté radialement par rapport aux axes XX et YY, sont articulées par leurs extrémités sur les extrémités des tiges cylindriques 48a et 50a, et 48b et 50b respectivement. Le système ainsi constitué forme un parallélogramme déformable dont deux des côtés sont matérialisés par les biellettes 52a et 52b et qui permet de transmettre à l'identique à la plaque support 38 du capteur 14 toute rotation de l'arbre d'entraînement 42 et de la pièce 44.

Avantageusement bien que de façon non impérative, les butées 40a et 40b sont constituées par des parties de plus grand diamètre formées à la base des tiges cylindriques 50a et 50b, comme l'illustrent les figures 1 et 2.

Grâce à l'agencement qui vient d'être décrit, lorsque l'arbre d'entraînement 42 tourne dans le sens des aiguilles d'une montre en considérant la figure 2A la butée 40a est normalement en appui sur la face latérale 41a du bloc 24b du support 24, de telle sorte qu'aucune rotation du capteur 14 autour de l'axe YY ne se produit et que l'ensemble formé par le capteur 14 et par le support 24 de la cible 16 tourne à l'unisson autour de l'axe XX. Le capteur 14 est alors orienté radialement vers la paroi du puits de forage. En ajoutant à cette rotation une translation parallèlement à l'axe XX de l'ensemble de l'appareil 10 vers le haut, on réalise le mouvement en hélice du capteur permettant d'effectuer les mesures.

Lorsque, à un moment quelconque qui peut être aussi bien avant la mesure qu'après ou pendant celle-ci, on désire effectuer un étalonnage du capteur 14, il suffit conformément à l'invention d'inverser le sens de rotation de l'arbre d'entraînement 42.

Comme l'illustrent les figures 2B et 2C, l'arbre d'entraînement 20 entraîne alors en rotation dans le sens inverse des aiguilles d'une montre les deux tiges cylindriques 48a et 48b autour de l'axe XX. Ce mouvement de rotation est transmis comme précédemment à la plaque 38 supportant le capteur 14 par les biellettes 52a et 52b, au travers des tiges cylindriques 50a et 50b. Cependant, étant donné que le sens de rotation a été inversé, la butée 50a qui était en appui sur la face 51a du bloc 24b s'éloigne de ce bloc, de telle sorte que la rotation de la plaque 38 n'est pas transmise au support de cible 24. Par conséquent, sous l'effet des forces d'inertie et de frottement, il se produit une rotation relative entre la plaque 38 supportant le capteur 14 et le support 24 portant la cible 16, autour de l'axe YY, comme l'illustrent successivement les figures 2B et 2C.

Comme l'illustre la figure 2D, cette rotation du capteur 14 autour de l'axe YY se poursuit jusqu'à la venue en appui de la deuxième butée 40b sur l'autre face 41b du bloc 24b. Avantageusement, cette venue en appui se produit lorsque le capteur 14 a effectué une rotation de 180° autour de son axe YY, de telle sorte qu'il est alors en vis-à-vis de la cible 16.

Le réétalonnage du capteur peut alors être effectué dans des conditions aussi proches que possible des conditions de mesure, puisque la distance séparant le capteur de la cible est approximativement égale à la distance séparant le capteur de la paroi du puits lors de la mesure et que l'écoulement du fluide contenu dans le puits entre le capteur et la cible est un écoulement qui s'effectue pratiquement à la même vitesse et dans la même direction que l'écoulement du fluide entre le capteur et la paroi lors de la mesure. En effet, l'étalonnage s'effectue alors que l'ensemble formé par le capteur et la cible tourne à l'unisson autour de l'axe XX de l'appareil à la même vitesse que pendant la mesure mais en sens inverse, seule la translation de l'appareil parallèlement à l'axe XX étant généralement stoppée. Etant donné que l'étalonnage s'effectue in situ, les conditions d'environnement telles que la température et la pression sont évidemment les mêmes que celles qui règnent pendant la mesure.

Pour compléter la description de l'appareil 10, il est précisé en se reportant à la figure 1 que des conducteurs électriques 54 sont placés à l'intérieur de l'arbre d'entraînement intérieur 42 et traversent la pièce 44 pour être connectés par une de leurs extrémités sur la plaque 38 supportant le capteur 14. L'extrémité supérieure des conducteurs électriques 54 est connectée à un module électrique de l'appareil (non représenté), de conception classique, servant à la fois à fournir au capteur les signaux électriques nécessaires à son fonctionnement et à assurer un premier traîtement des signaux fournis par le capteur.

Les conducteurs électriques 54 tournent avec l'arbre 42 et la pièce 44 et ils comportent, au niveau de la partie supérieure de cette dernière, un connecteur (non représenté) autorisant le démontage du support 24 portant à la fois la cible 16 et le capteur 14. La connexion électrique entre l'extrémité des conducteurs électriques 54 connectés sur la plaque 38 et le capteur 14 est assurée par des contacts qui sont automatiquement raccordés électriquement lorsque le capteur 14 est fixé sur la plaque support 38, tout en autorisant le démontage du capteur.

D'une manière en elle-même classique dans les appareils utilisés dans les puits de forage, l'appareil de mesure 10 illustré sur la figure 1 comprend également des moyens pour assurer le confinement étanche de la partie de l'appareil situé à l'intérieur de l'enveloppe 18, au-dessus de la pièce 44. Ces moyens comprennent notamment deux bagues d'extrémité 55 et 56 raccordées respectivement de façon étanche sur l'enveloppe 18 et sur l'arbre creux extérieur 20, et une bague 57 reliée à la bague 55 par un soufflet expansible 58 et glissant sur la bague 55.

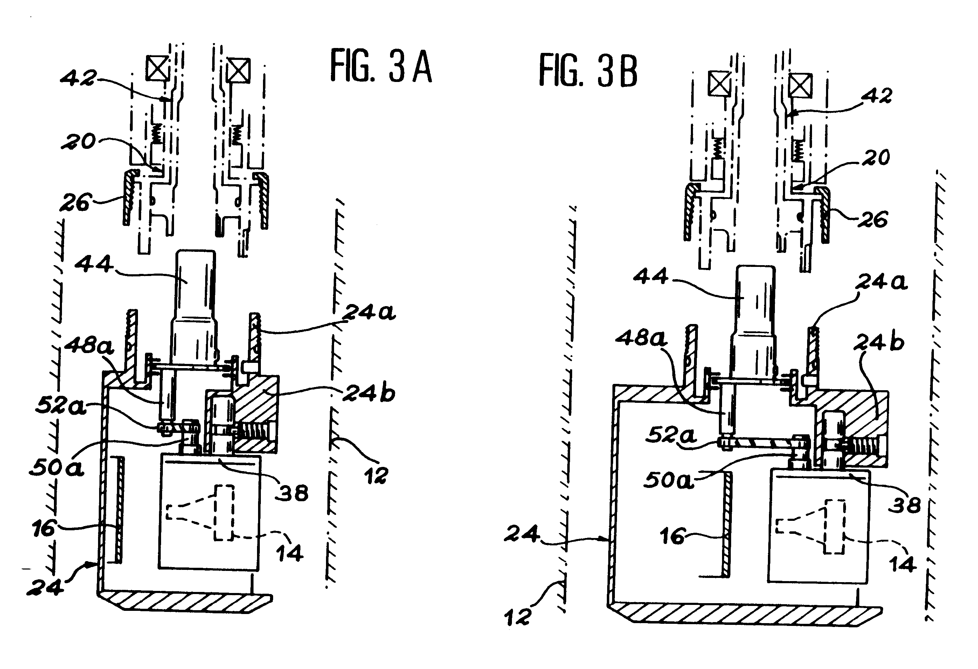

Les figures 3A et 3B montrent que la partie inférieure de l'appareil de mesure 10 qui vient d'être décrit en se référant à la figure 1 est interchangeable, ce qui permet, en utilisant le même appareil, d'effectuer des mesures dans des puits de diamètre différent.

Ainsi, on voit sur les figures 3A et 3B que l'ensemble constitué par le support de cible 24, la pièce d'entraînement 44, la cible 16 fixée sur le support 24, la plaque 38 supportant le capteur 14, et le mécanisme transmettant tout mouvement de rotation de la pièce 44 à la plaque 38 et comprenant notamment les biellettes 52a, 52b, constitue un module interchangeable. Le démontage de ce module est obtenu par un simple dévissage de la bague 26.

Chaque module présente des dimensions différentes adaptées à des mesures dans des puits de diamètre différent. Plus précisément, le support de cible 24 définit la distance qui existe entre l'axe longitudinal XX de l'appareil et l'axe de rotation YY du capteur. Etant donné que les dimensions du capteur 14 sont toujours pratiquement identiques, cette distance augmente avec le diamètre du puits, afin que la distance $\underline{d}$ (figure 1) séparant le capteur en position de mesure de la paroi du puits en vis-à-vis soit comprise entre des limites déterminées, qui dépendent des caractéristiques du capteur, quel que soit le diamètre du puits.

Dans chacun des modules, la pièce d'entraînement 44 ainsi que la plaque 38 supportant le capteur 14 sont toujours identiques, de telle sorte que les modifications de la distance séparant les axes XX et YY entraînent simplement des modifications de longueur et, éventuellement, de forme des biellettes 52.

Par ailleurs, afin que la distance séparant le capteur 14 de la cible 16 en position d'étalonnage du capteur reste également toujours comprise entre lesdites limites déterminées, de telle sorte que cette distance soit approximativement égale à la distance séparant le capteur de la paroi du puits en position de mesure, la cible 16 est montée dans le support 24 de telle sorte que la distance séparant cette cible de l'axe YY soit pratiquement toujours la même, comme l'illustrent bien les figures 3A et 3B.

Il est à noter que le support 24 forme une cage fermée en dessous du capteur et de la cible et comportant, derrière la cible, une partie à section en arc de cercle centrée sur l'axe XX et dont la distance à la paroi du puits est approximativement constante, indépendamment du diamètre du puits.

Enfin, pour que le centrage de l'appareil à l'intérieur du puits s'effectue sans trop de difficulté, les différentes pièces constituant l'appareil, et notamment la partie rotative de celui-ci, sont conçues de façon à assurer en permanence un équilibrage aussi satisfaisant que possible de l'ensemble autour de l'axe XX de l'appareil.

Dans le mode de réalisation qui vient d'être décrit en se référant aux figures 1 à 3, les dimensions du capteur 14 sont suffisamment faibles pour qu'une simple rotation de ce dernier autour de l'axe YY permette d'amener ce capteur en vis-à-vis de la cible 16, sans qu'aucune interférence entre le capteur et la paroi du puits se produise. Cependant, lorsqu'on utilise un capteur de plus grande dimension, il peut être nécessaire d'adjoindre à ce mouvement de rotation du capteur autour de son axe un mouvement complémentaire conduisant à un recentrage de l'ensemble formé par le capteur et la cible par rapport à l'axe XX de l'appareil.

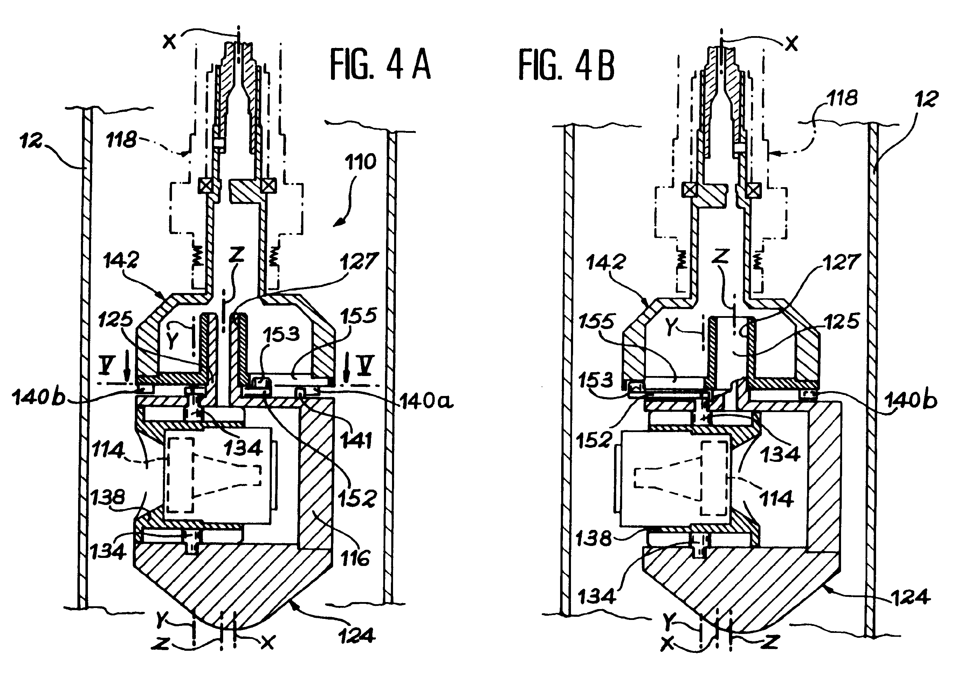

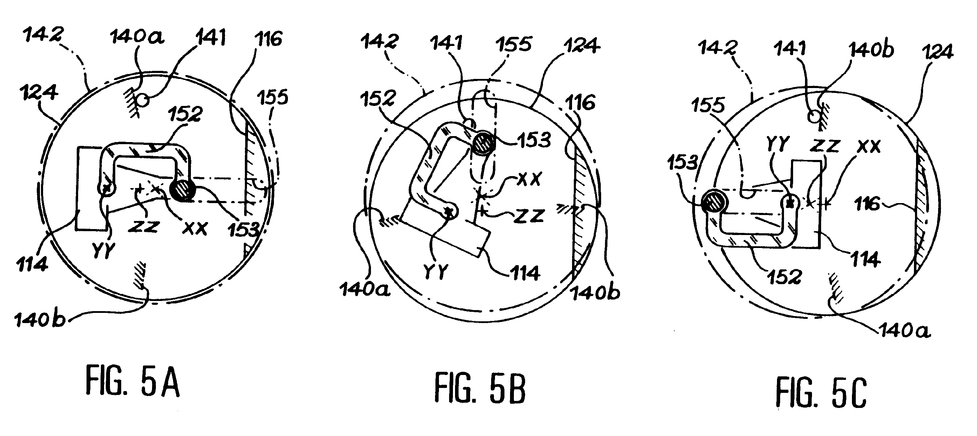

Un deuxième mode de réalisation de l'invention adapté à ce cas va à présent être décrit en se référant aux figures 4 et 5. Dans ce mode de réalisation, les mêmes chiffres de référence augmentés de 100 sont utilisés pour désigner des organes ayant des fonctions analogues.

L'appareil de mesure 110 représenté sur la figure 4A comprend un capteur 114 monté de façon interchangeable sur un support de capteur 138 articulé par deux pivots alignés 134 d'axe YY sur un support de cible 124. Une cible 116 est fixée sur le support de cible 124 de telle sorte qu'une rotation du capteur 114 d'environ 180° autour de l'axe YY permette d'amener le capteur en face de cette cible. Sur sa face supérieure, le support de cible 124 comporte une tige cylindrique creuse 125 qui est reçue dans un alésage 127 formé dans une tête rotative 142, elle-même montée de façon tournante dans l'enveloppe extérieure tubulaire 118 de l'appareil. De façon plus précise l'axe ZZ de l'alésage 127 dans lequel est reçue la tige 125 est parallèle et décalé par rapport à l'axe longitudinal XX de la tête de mesure 110, qui constitue l'axe de rotation de la tête 142.

Afin de permettre l'entraînement en rotation du capteur 114 lors d'une rotation de la tête rotative 142 autour de l'axe XX, une biellette en forme de U 152 apparaissant mieux sur les figures 5A à 5C est clavetée par l'une de ses extrémités sur l'extrémité du pivot supérieur 134 et porte à son extrémité opposée un pion 153 qui est reçu dans une fente radiale 155 formée sur la face inférieure de la tête rotative 142. Cette biellette 152, qui est disposée dans un plan radial par rapport à l'axe longitinal XX de l'appareil, entre la tête rotative 142 et le support de cible 124, assure ainsi la transmission au capteur 114 de tout mouvement de rotation dans l'un ou l'autre sens de la tête rotative 142.

Par ailleurs, l'axe de la fente radiale 155 coupe les axes XX et ZZ et cette rainure est située du côté opposé à l'axe ZZ par rapport à l'axe XX. De plus, l'axe d'observation du capteur 114 est situé dans un plan radial par rapport à l'axe YY dans lequel est situé l'axe du pion 153, de telle sorte que, comme l'illustrent les figures 4A et 5A, lorsque le capteur est orienté radialement vers la paroi du puits dans lequel est placé l'appareil, l'axe de rotation ZZ du support de cible 124 est placé entre l'axe longitudinal XX de l'appareil et l'axe de rotation YY du capteur. Cette position, qui correspond à la position de mesure, est normalement maintenue lors de la rotation de la tête 142 dans le sens des aiguilles d'une montre en considérant la figure 5a par la venue en appui d'une butée 140a fixée sur la face inférieure de la tête contre une butée complémentaire 141 fixée sur la face supérieure du support de cible (sur les figures 5A à 5C, les contours de la tête rotative 142 et du support de cible 124 sont représentés respectivement en trait mixte et en trait plein).

Lors d'une rotation de la tête 142 dans le sens des aiguilles d'une montre, commandée par des moyens appropriés (non représentés) situés dans la partie supérieure de l'appareil, l'ensemble comprenant le support de cible 124, la cible 116, le support de capteur 138 et le capteur 114 tourne alors à l'unisson autour de l'axe longitudinal XX de l'appareil. Cette rotation permet d'effectuer les mesures désirées à l'aide du capteur 114.

Conformément à l'invention, lorsqu'on désire amener la cible en face du capteur, par exemple pour effectuer un étalonnage de ce dernier à l'intérieur du puits, il suffit d'inverser le sens de rotation de la tête 142. Comme l'illustrent successivement les figures 5B et 5C, la rotation de la tête 142 n'est alors plus transmise qu'au capteur 114 au travers de la biellette 152. Sous l'effet des forces d'inertie et des forces de frottement, le support de cible 124 tend au contraire à s'immobiliser, de sorte que, pendant toute cette phase, son orientation est supposée inchangée sur les figures 5A et 5C.

Lorsque l'ensemble constitué par la tête rotative 142 et le capteur 114 a ainsi effectué une rotation d'environ 180°, respectivement autour des axes XX et YY, l'axe ZZ de rotation du support de cible 124 par rapport à la tête 142 se trouve à nouveau placé dans un même plan que les axes XX et YY, mais à l'opposé de l'axe YY par rapport à l'axe XX, comme l'illustre la figure 5C. Comme on le voit sur les figures 4B et 5C, le capteur 114 fait alors face à la cible 116 et l'ensemble de ces deux organes s'est automatiquement recentré par rapport à l'axe XX de l'appareil, de telle sorte que la cible 116 fait saillie d'un côté et que le capteur 114 fait saillie de l'autre côté, approximativement sur la même distance, par rapport à la tête 142. Le maintien relatif du capteur et de la cible dans cette position, permettant d'effectuer l'étalonnage du capteur, est assuré par la venue en appui de la butée 141 fixée sur la face supérieure du support de cible 124 contre une deuxième butée 140b placée sur la face inférieure de la tête rotative 142, comme le montre la figure 5C.

De la même manière que dans le premier mode de réalisation décrit, la distance existant alors entre le capteur 114 et la cible 116 est calculée de façon à être approximativement égale à la distance qui existe lors de la mesure entre le capteur et la paroi du puits de forage.

Avantageusement, l'appareil de mesure 110 illustré sur les figures 4A et 4B comporte comme précédemment une partie inférieure interchangeable permettant d'adapter cet appareil à des puits de diamètre variable. De même, le capteur 114 est monté sur son support 138 de façon amovible afin de permettre son remplacement.

L'alimentation électrique du capteur 114 ainsi que la transmission des signaux qu'il délivre sont assurées par des conducteurs électriques (non représentés) passant dans la tête rotative 142, puis à l'intérieur de la tige cylindrique creuse 125, pour être connectés sur le capteur par l'intermédiaire du support 138.

Enfin, des moyens d'étanchéité comparables à ceux du premier mode de réalisation sont également prévus.

Bien entendu, l'invention n'est pas limitée aux modes de réalisation qui viennent d'être décrits à titre d'exemples, mais en couvre toute les variantes.

Ainsi, dans le mode de réalisation des figures 4 et 5, la tête tournante 142 pourrait être montée libre dans l'enveloppe 118 de l'appareil et l'entraînement en rotation du capteur 114 assuré directement sur la tige 125 du support de cible, au travers d'un mécanisme actionné par un arbre tournant placé à l'intérieur de la tête 142. Ce dernier mécanisme peut être un mécanisme à biellettes analogue à celui du premier mode de réalisation. Ces mécanismes peuvent aussi être remplacés par tous mécanismes équivalents du type cardan.

Par ailleurs, on comprendra aisément que l'angle de débattement de la rotation inverse permettant d'amener la cible en face du capteur peut être différent de 180°, la seule condition à remplir étant que cet angle soit suffisant pour que la cible soit escamotée par rapport au capteur lorsque ce dernier tourne dans le sens de la mesure.

Enfin, les moyens permettant de transmettre à la cible un mouvement de rotation du capteur avec un jeu angulaire limité peuvent être remplacés par tout autre moyen commandant un déplacement relatif entre la cible et le capteur sous l'effet d'une inversion du sens de rotation.

**Revendications**

1. Procédé de diagraphie utilisant un capteur (14, 114) équipant un appareil adapté à être placé dans un puits de forage, dans lequel, lors d'une phase de mesure, on anime le capteur d'une mouvement de rotation dans un premier sens de façon à effectuer un balayage circonférentiel de la paroi du puits, caractérisé par le fait que, lors d'une phase d'étalonnage, on amène en face l'un de l'autre le capteur et une cible étalon (16,116) en inversant le sens de rotation du capteur afin d'obtenir une mesure de référence pour l'étalonnage du capteur.

2. Procédé selon la revendication 1, caractérisé par le fait que la distance entre le capteur et la cible lors de la phase d'étalonnage est sensiblement égale à la distance entre le capteur et la paroi du puits lors de la phase de mesure.

3. Procédé selon la revendication 1 ou 2, dans lequel la rotation du capteur est effectuée autour d'un axe sensiblement parallèle à la direction longitudinale du puits lors de la phase de mesure, caractérisé par le fait que, lors de la phase d'étalonnage, le capteur et la cible sont amenés en face l'un de l'autre sensiblement perpendiculairement à cette direction longitudinale.

4. Procédé selon la revendication 3, caractérisé par le fait qu'on utilise une cible (16,116) disposant d'un jeu angulaire limité par rapport au capteur (14, 114), de telle sorte que, lors d'une phase de mesure, le mouvement de rotation du capteur dans le premier sens soit transmis à la cible occupant une première position angulaire décalée angulairement par rapport au capteur et que, lorsqu'on inverse le sens du mouvement de rotation du capteur, ce mouvement de rotation soit transmis à la cible occupant une deuxième position angulaire en face du capteur, après rattrapage dudit jeu angulaire.

5. Procédé selon la revendication 4, caractérisé par le fait qu'on utilise un capteur (14,114) monté de façon rotative qur un support (24,124) portant la cible (16,116), par l'intermédiaire d'un premier axe (YY) parallèle et décalé par rapport à un axe longitudinal (XX) de l'appareil, de telle sorte que, lorsque le mouvement de rotation du capteur est transmis à la cible dans le premier sens et en sens inverse, l'ensemble formé par le capteur, le support et la cible tourne à l'unisson autour dudit axe longitudinal (XX) et que, lors d'un rattrapage dudit jeu angulaire, le capteur tourne autour du premier axe (YY) par rapport au support.

6. Procédé selon la revendication 5, caractérisé par le fait qu'on utilise un support (124) portant la cible (116), monté de façon rotative sur une tête (142), autour d'un deuxième axe (ZZ) parallèle et décalé par rapport au premier axe (YY) et à l'axe longitudinal (XX) de l'appareil, la tête (142) étant elle-même montée tournante autour de cet axe longitudinal (XX), de telle sorte que, lors d'un rattrapage dudit jeu angulaire, à la rotation du capteur (114) autour du premier axe (YY) s'ajoute un recentrage de l'ensemble formé par la cible (116) et le capteur (114), par rapport audit axe longitudinal (XX).

7. Procédé selon l'une quelconque des revendications 4 à 6, caractérisé par le fait qu'on entraîne directement le capteur (14,114) en rotation.

8. Procédé selon la revendication 6, caractérisé par le fait qu'on entraîne directement la tête (142) en rotation.

9. Dispositif de diagraphie apte à être placé dans un puits de forage, comprenant une enveloppe (18, 118), un capteur (14,114) monté tournant autour d'un axe longitudinal (XX) de l'enveloppe et des moyens d'entraînement pour faire tourner le capteur autour de cet axe dans un premier sens de façon à balayer la paroi du puits, caractérisé par le fait qu'il comprend :
   – une cible étalon (16,116) ; et
   – des moyens de déplacement (40a,40b,41a, 41b ; 140a,140b, 141) sensibles au sens de rotation du capteur pour déplacer l'un par rapport à l'autre le capteur et la cible d'une position de mesure pour laquelle le capteur est orienté vers la paroi du puits à une position d'étalonnage pour laquelle le capteur est en face de la cible lorsqu'on inverse le sens de rotation.

10. Dispositif selon la revendication 9, caractérisé par le fait que les moyens de déplacement comprennent des moyens de transmission de mouvement (40a,40b, 41a,41 ; 140a,140b,141) définissant un jeu angulaire limité tel que lorsque le capteur tourne dans le premier sens, la cible occupe une position de mesure décalée angulairement par rapport au capteur et que, lorsque le capteur tourne en sens inverse, la cible occupe la position d'étalonnage.

11. Dispositif selon la revendication 10, caractérisé par le fait que le jeu angulaire limité correspond à une rotation d'environ 180°.

12. Dispositif selon l'une quelconque des revendications 10 et 11, caractérisé par le fait qu'il comprend une tête tournante (20,142) portant un support de cible (24,124) et montée de façon rotative sur l'axe longitudinal (XX) de l'enveloppe, le capteur (14,114) étant supporté de façon rotative par le support de cible, autour d'un premier axe (YY) parallèle et décalé par rapport audit axe longitudinal (XX).

13. Dispositif selon la revendication 12, caractérisé par le fait que le support de cible (24,124) est monté sur la tête tournante (20,142) de façon interchangeable, de telle sorte que la distance séparant le premier axe (YY) dudit axe longitudinal (XX) peut être choisie en fonction du diamètre du puits de forage, afin que la distance (d) entre le capteur et la paroi du puits soit comprise entre des limites déterminées, lorsque le capteur tourne dans le sens de mesure.

14. Dispositif selon la revendication 13, caractérisé par le fait que la cible (16) est fixée sur le support de cible (24) de telle sorte que la distance entre le capteur et la cible soit comprise entre lesdites limites déterminées, lorsque le capteur tourne en sens opposé.

15. Dispositif selon l'une quelconque des revendications 12 à 14, caractérisé par le fait que le capteur (14) est fixé de façon amovible sur un support de capteur (38) monté de façon rotative sur le support de cible (24), autour du premier axe (YY).

16. Dispositif selon l'une quelconque des revendications 12 à 15, caractérisé par le fait que le support de cible (24) est fixé sur la tête tournante (20), les moyens de transmission de mouvement (40a,40b,41a,41b) étant placés entre le capteur (14) et le support de cible (24).

17. Dispositif selon la revendication 16, caractérisé par le fait que les moyens d'entraînement pour faire tourner le capteur (14) comprennent un arbre d'entraînement (42) monté selon ledit axe longitudinal (XX) à l'intérieur de la tête tournante (20), et un mécanisme (52a, 52b) de transmission au capteur d'un mouvement de rotation dudit arbre.

18. Dispositif selon la revendication 17, caractérisé par le fait que ledit mécanisme de transmission comprend deux biellettes (52a,52b) parallèles entre elles et dont les extrémités sont articulées sur deux paires de pions (48a,48b,50a,50)) fixées respectivement sur l'arbre d'entraînement (42) et sur le capteur (14).

19. Dispositif selon l'une quelconque des revendications 12 à 15, caractérisé par le fait que le support de cible (124) est supporté de façon rotative par la tête tournante (142), autour d'un deuxième axe (ZZ) parallèle et décalé par rapport au premier axe (YY) et audit axe longitudinal (XX), ce deuxième axe étant situé entre le premier axe et l'axe longitudinal lorsque le capteur tourne dans le sens de mesure, lesdits moyens de transmission de mouvement (140a,140b,141) étant placés entre la tête tournante (142) et le support de cible (124).

20. Dispositif selon la revendication 19, caractérisé par le fait que les moyens d'entraînement pour faire tourner le capteur (114) comprennent la tête tournante (142) et un mécanisme (152) de transmission au capteur d'un mouvement de rotation de la tête tournante.

21. Dispositif selon la revendication 20, caractérisé par le fait que ledit mécanisme de transmission comprend une biellette (152) dont une extrémité est fixée sur un axe d'entraînement (134) du capteur constituant le premier axe (YY), et dont l'extrémité opposée porte un pion (153) reçu dans une rainure radiale (155) formée dans la tête tournante (142).

**Claims**

1. A logging method using a sensor (14, 114) fitted to equipment suitable for being placed in a borehole, wherein, during a measurement stage, the sensor is caused to rotate in a first direction in order to scan the wall of the borehole circumferentially, the method being characterized by the fact that during a calibration stage the sensor and a calibrating target (16, 116) are brought face to face by reversing the direction of rotation of the sensor in order to obtain a reference measurement for calibrating the sensor.

2. A method according to claim 1, characterized by the fact that the distance between the sensor and the target during the calibration stage is substantially equal to the distance between the sensor and the wall of the borehole during the measurement stage.

3. A method according to claim 1 or 2, in which the sensor is rotated during the measurement stage about an axis which is substantially parallel to the longitudinal direction of the borehole, the method being characterized by the fact that, during the calibration stage, the sensor and the target are brought face to face substantially perpendicularly to said longitudinal direction.

4. A method according to claim 3, characterized by the fact that a target (16, 116) is used having limited angular lost motion relative to the sensor (14, 114) such that during a measurement stage, the rotation of the sensor in the first direction is transmitted to the target occupying a first angular position offset angularly relative to the sensor, and that when the direction of rotation of the sensor is reversed, this rotary motion is transmitted to the target occupying a second angular position facing the sensor after said angular lost motion has been taken up.

5. A method according to claim 4, characterized by the fact that a sensor (14, 114) is used mounted to rotate on a support (24, 124) carrying the target (16, 116) by means of a first axis (YY) parallel to and offset from a longitudinal axis (XX) of the equipment, such that when the rotary motion of the sensor is transmitted to the target in the first direction and in the opposite direction the assembly formed by the sensor, the support, and the target rotates in unison about said longitudinal axis (XX) and that, while said angular lost motion is being taken up, the sensor rotates about the first axis (YY) relative to the support.

6. A method according to claim 5, characterized by the fact that a support (124) carrying the target (116) is used rotatably mounted on a head (142) to rotate about a second axis (ZZ) parallel to and offset from the first axis (YY) and the longitudinal axis (XX) of the equipment, the head (142) being itself mounted to rotate about said longitudinal axis (XX), such that while said angular lost motion is being taken up, rotation of the sensor (114) about the first axis (YY) is combined with recentering of the assembly constituted by the target (116) and the sensor (114) relative to said longitudinal axis (XX).

7. A method according to any one of claims 4 to 6, characterized by the fact that rotary drive is applied directly to the sensor (14, 114).

8. A method according to claim 6, characterized by the fact that rotary drive is applied directly to the head (142).

9. Logging apparatus suitable for being placed in a borehole, the apparatus comprising a casing (18, 118), a sensor (14, 114) mounted to rotate about a longitudinal axis (XX) of the casing, and drive means for rotating the sensor about said axis in a first direction to scan the wall of the borehole, the apparatus being characterized in that it further comprises:
a calibrating target (16, 116); and
displacement means (40a, 40b, 41a, 41b; 140a, 140b, 141) responsive to the direction of rotation of the sensor for displacing the sensor and the target relative to each other from a measurement position in which the sensor is oriented towards the wall of the borehole to a calibration position in which the sensor is face to face with the target, whenever the direction of rotation is reversed.

10. Apparatus according to claim 9, characterized by the fact that the displacement means comprise motion transmission means (40a, 40b, 41a, 41; 140a, 140b, 141) defining limited angular lost motion such that when the sensor rotates in the first direction the target occupies a measurement position which is angularly offset relative to the sensor and when the sensor rotates in the opposite direction, the target occupies the calibration position.

11. Apparatus according to claim 10, characterized by the fact that the limited angular lost motion corresponds to rotation through about 180°.

12. Apparatus according to claim 10 or 11, characterized by the fact that it comprises a rotary head (20, 142) carrying a target support (24, 124) and mounted to rotate about the longitudinal axis (XX) of the casing, the sensor (14, 114) being supported by the target support to rotate about a first axis (YY) parallel to and offset from said longitudinal axis (XX).

13. Apparatus according to claim 12, characterized by the fact that the target support (24, 124) is mounted on the rotary head (20, 142) in interchangable manner such that the distance between the first axis (YY) and said longitudinal axis (XX) can be selected as a function of the diameter of the borehole, so as to ensure that the distance (d) between the sensor and the wall of the borehole lies within predetermined limits when the sensor rotates in the measurement direction.

14. Apparatus according to claim 13, characterized by the fact that the target (16) is fixed on the target support (24) in such a manner that the distance between the sensor and the target lies between said determined limits when the sensor is rotating in said opposite direction.

15. Apparatus according to any one of claims 12 to 14, characterized by the fact that the sensor (14) is removably fixed on a sensor support (38) mounted to rotate on the target support (24) about the first axis (YY).

16. Apparatus according to any one of claims 12 to 15, characterized by the fact that the target support (24) is fixed on the rotary head (20), with the motion transmission means (40a, 40b, 41a, 41b) being placed between the sensor (14) and the target support (24).

17. Apparatus according to claim 16, characterized by the fact that the drive means for rotating the sensor (14) comprise a drive shaft (42) mounted along said longitudinal axis (XX) inside the rotary head (20), and a transmission mechanism (52a, 52b) for transmitting the rotary motion of said shaft to the sensor.

18. Apparatus according to claim 17, characterized by the fact that said transmission mechanism comprises two links (52a, 52b) which are parallel to each other and whose ends are hinged on two pairs of studs (48a, 48b, 50a, 50b) fixed respectively on the drive shaft (42) and on the sensor (14).

19. Apparatus according to any one of claims 12 to 15, characterized by the fact that the target support (124) is supported by the rotary head (142) to rotate about a second axis (ZZ) parallel to and offset from both the first axis (YY) and said longitudinal axis (XX), said second axis being situated between the first axis and the longitudinal axis when the sensor rotates in the measurement direction, said motion transmission means (140a, 140b, 141) being placed between the rotary head (142) and the target support (124).

20. Apparatus according to claim 19, characterized by the fact that the drive means for rotating the sensor (114) comprise the rotary head (142) and a transmission mechanism (152) for transmitting the rotary motion of the rotary head to the sensor.

21. Apparatus according to claim 20, characterized by the fact that said transmission mechanism comprises a link (152) having one end fixed to a drive shaft (134) of the sensor constituting the first axis (YY), and whose opposite end carries a stud (153) received in a radial groove (155) formed in the rotary head (142).

**Patentansprüche**

1. Diagraphieverfahren unter Verwendung eines Fühlers (14,114), mit dem ein in einem Bohrloch plazierbares Gerät bestückt ist, bei dem in einer Meßphase der Fühler zu einer Drehbewegung in einer ersten Richtung derart gebracht wird, daß er eine Abtastung der Bohrlochwandung in Umfangsrichtung ausführt, dadurch **gekennzeichnet**, daß in einer Eichphase man den Fühler gegenüber einem Eichtarget (16,116) plaziert, indem man die Drehrichtung des Fühlers umkehrt, um eine Referenzmessung für das Eichen des Fühlers zu gewinnen.

2. Verfahren nach Anspruch 1, dadurch gekennzeichnet, daß der Abstand zwischen dem Fühler und dem Target während der Eichphase im wesentlichen gleich dem Abstand zu dem Fühler und der Bohrlochwandung während der Meßphase ist.

3. Verfahren nach Anspruch 1 oder 2, bei dem die Drehung des Fühlers um eine Achse bewirkt wird, die im wesentlichen parallel zur Längsrichtung des Bohrlochs in der Meßphase ist, dadurch gekennzeichnet, daß in der Eichphase der Fühler und das Target einander gegenüber angeordnet werden im wesentlichen senkrecht zu dieser Längsrichtung.

4. Verfahren nach Anspruch 3, dadurch gekennzeichnet, daß man ein Target (16,116) verwendet, das über ein begrenztes Winkelspiel relativ zu dem Fühler (14,114) verfügt, derart, daß während einer Meßphase die Drehbewegung des Fühlers in der ersten Richtung auf das Target übertragen wird, das eine erste winkelmäßig versetzte Winkelposition bezüglich des Fühlers einnimmt, und daß, sobald man die Drehbewegungsrichtung des Fühlers umkehrt, diese Drehbewegung auf das Target überträgt, das eine zweite Winkelposition gegenüber dem Fühler einnimmt, nachdem das Winkelspiel durchlaufen worden ist.

5. Verfahren nach Anspruch 4, dadurch gekennzeichnet, daß man einen Fühler (14,114) verwendet, der drehbeweglich auf einem Support (24, 124) angeordnet ist, der das Target (16,116) trägt mittels einer ersten Achse (YY) parallel zur Längsachse (XX) des Gerätes und relativ zu dieser versetzt, derart, daß bei der Übertragung der Drehbewegung des Fühlers auf das Target in der ersten Richtung und in der entgegengesetzten Richtung die Baugruppe, gebildet von dem Fühler, dem Support und dem Target, sich gemeinsam um die Längsachse (XX) dreht, und daß beim Durchlaufen des Winkelspiels der Fühler um die erste Achse (YY) relativ zu dem Support umläuft.

6. Verfahren nach Anspruch 5, dadurch gekennzeichnet, daß man einen das Target (116) tragenden Support (124) verwendet, der auf einem Kopf (142) drehbeweglich um eine zweite Achse (ZZ) parallel zu der ersten Achse (YY) und zu dieser und der Längsachse (XX) des Gerätes versetzt verwendet, wobei der Kopf (142) selbst drehbeweglich um diese Längsachse (XX) angeordnet ist, derart, daß beim Durchlaufen des Winkelspiels zu der Drehung des Fühlers (114) um die erste Achse (YY) eine Rezentrierung der Baugruppe hinzukommt, gebildet von dem Target (116) und dem Fühler (114) relativ zu der Längsachse (XX).

7. Verfahren nach einem der Ansprüche 4 bis 6, dadurch gekennzeichnet, daß man den Fühler (14,114) direkt zur Drehung antreibt.

8. Verfahren nach Anspruch 6, dadurch gekennzeichnet, daß man den Kopf (142) direkt zur Drehung antreibt.

9. Diagraphieanordnung, die in einem Bohrloch plazierbar ist, umfassend eine Hülle (18,118), einen Fühler (14,114), der drehbeweglich um eine Längsachse (XX) der Hülle angeordnet ist, und Antriebsmittel zum Umlaufenlassen des Fühlers um diese Achse in einer ersten Richtung, derart, daß die Wandung des Bohrlochs abgetastet wird, dadurch gekennzeichnet, daß sie umfaßt:
ein Eichtarget (16,116) und
Verlagerungsmittel (40a,40b,41a,41b ; 140a,140b,141), die auf die Drehrichtung des Fühlers reagieren zum Verlagern des Fühlers und des Targets relativ zueinander aus einer Meßposition, in der der Fühler in Richtung auf die Bohrlochwandung orientiert ist, in eine Eichposition, in der der Fühler dem Target gegenübersteht, wenn man die Drehrichtung umkehrt.

10. Anordnung nach Anspruch 9, dadurch gekennzeichnet, daß die Verlagerungsmittel Bewegungsübertragungsmittel (40a,40b,41a,41 ; 140a,140b, 141) umfassen, welche ein begrenztes Winkelspiel definieren, derart, daß dann, wenn der Fühler sich in der ersten Richtung dreht, das Target eine Meßposition einnimmt, die winkelmäßig versetzt ist relativ zu dem Fühler, und daß, wenn der Fühler sich in entgegengesetzter Richtung dreht, das Target die Eichposition einnimmt.

11. Anordnung nach Anspruch 10, dadurch gekennzeichnet, daß das begrenzte Winkelspiel einer Drehung von etwa 180° entspricht.

12. Anordnung nach einem der Ansprüche 10 und 11, dadurch gekennzeichnet, daß sie einen umlaufenden Kopf (20,142) umfaßt, der einen Targetsupport (24,124) trägt und drehbeweglich um die Längsachse (XX) der Hülle montiert ist, wobei der Fühler (14,114) derart von dem Targetsupport drehbeweglich um eine erste Achse (YY), die parallel zur Längsachse (XX) verläuft und gegenüber dieser versetzt ist, abgestützt wird.

13. Anordnung nach Anspruch 12, dadurch gekennzeichnet, daß der Targetsupport (24,124) auf dem drehbaren Kopf (20,142) austauschbar montiert ist, derart, daß der Abstand zwischen der ersten Achse (YY) und der Längsachse (XX) in Abhängigkeit vom Durchmesser des Bohrlochs wählbar ist, damit der Abstand (d) zwischen dem Fühler und der Bohrlochwandung zwischen vorbestimmten Grenzen liegt, wenn der Fühler sich in Meßrichtung dreht.

**14.** Anordnung nach Anspruch 13, dadurch gekennzeichnet, daß das Target (16) auf dem Targetsupport (24) derart befestigt ist, daß der Abstand zwischen dem Fühler und dem Target innerhalb der genannten vorbestimmten Grenzen liegt, wenn der Fühler sich in entgegengesetzter Richtung dreht.

**15.** Anordnung nach einem der Ansprüche 12 bis 14, dadurch gekennzeichnet, daß der Fühler (14) abnehmbar auf einem Fühlersupport (38) angebracht ist, der drehbeweglich um die erste Achse (YY) auf dem Targetsupport montiert ist.

**16.** Anordnung nach einem der Ansprüche 12 bis 15, dadurch gekennzeichnet, daß der Targetsupport (24) auf dem drehbaren Kopf (20) befestigt ist, wobei die Bewegungsübertragungsmittel (40a, 40b,41a,41b) zwischem dem Fühler (14) und dem Targetsupport (24) plaziert sind.

**17.** Anordnung nach Anspruch 16, dadurch gekennzeichnet, daß die Antriebsmittel zum Drehenlassen des Fühlers (14) eine Antriebswelle (42) umfassen, die in der Längsachse (XX) im Inneren des drehbaren Kopfes (20) montiert ist und einen Übertragungsmechanismus (52a, 52b) zum Übertragen einer Drehbewegung der Welle auf den Fühler.

**18.** Anordnung nach Anspruch 17, dadurch gekennzeichnet, daß der Übertragungsmechanismus zwei Lenker (52a,52b) umfaßt, die zueinander parallel sind und deren Enden auf zwei Paaren von Zapfen (48a,48b,50a,50) angelenkt sind, die relativ zu der Antriebswelle (42) und zu dem Fühler (14) festliegend sind.

**19.** Anordnung nach einem der Ansprüche 12 bis 15, dadurch gekennzeichnet, daß der Targetsupport (124) von dem drehbaren Kopf (142) drehbeweglich um eine zweite Achse (ZZ) abgestützt ist, die parallel zur ersten Achse (YY) und zur Längsachse (XX) ist und relativ dazu versetzt ist, welche zweite Achse zwischen der ersten Achse und der Längsachse liegt, wenn der Fühler in Meßrichtung umläuft, wobei die Bewegungsübertragungsmittel (140a,140b,141) zwischen dem drehbaren Kopf (142) und dem Targetsupport (124) plaziert sind.

**20.** Anordnung nach Anspruch 19, dadurch gekennzeichnet, daß die Antriebsmittel zum Umlaufenlassen des Fühlers (114) den drehbaren Kopf (142) und einen Mechanismus (152) umfassen zum Übertragen einer Drehbewegung des drehbaren Kopfes auf den Fühler.

**21.** Anordnung nach Anspruch 20, dadurch gekennzeichnet, daß der Übertragungsmechanismus einen Lenker (152) umfaßt, dessen eines Ende auf einer Antriebsachse (134) des Fühlers festgelegt ist, welche die erste Achse (YY) bildet, und dessen entgegengesetztes Ende einen Zapfen (153) trägt, der in einer radialen Nut (155), ausgebildet in dem drehbaren Kopf (142), aufgenommen ist.

FIG. 1

EP 0 388 315 B1

14

FIG. 2 A

FIG. 2 B

FIG. 2 C

FIG. 2 D

FIG. 3B

FIG. 3A

16

FIG. 4 A

FIG. 4 B

EP 0 388 315 B1

FIG. 5A

FIG. 5B

FIG. 5C